# EUROPEAN PATENT SPECIFICATION

(11) **EP 4 258 624 B1**
(45) Date of publication and mention of the grant of the patent: **21.10.2026**
(21) Application number: 23192857.3
(22) Date of filing: 27.08.2021
(51) Int. Cl.: H04L 65/403, H04L 65/80, H04L 67/306, H04L 67/131

(54) **SPATIALLY AWARE MULTIMEDIA ROUTER SYSTEM AND METHOD**
RÄUMLICH BEWUSSTES MULTIMEDIA-ROUTERSYSTEM UND VERFAHREN
SYSTÈME ET PROCÉDÉ DE ROUTEUR MULTIMÉDIA À PERCEPTION SPATIALE

(30) Priority: 28.08.2020 US 202017005767
(43) Date of publication of application: 11.10.2023
(62) Document number(s) of the earlier application(s) in accordance with Art. 76 EPC: 21193511.9 / 3 962 038
(73) Proprietor: TMRW Foundation IP SARL, 2310 Luxembourg (LU)
(72) Inventor: Yerli, Cevat, 60314 Frankfurt/Main (DE)
(74) Representative: Schmidt, Steffen

(56) References cited:
- US-A1- 2009 254 843
- US-A1- 2011 185 286
- US-A1- 2018 234 471
- US-A1- 2019 310 757
- US-A1- 2020 099 891

## Description

### FIELD

The current disclosure refers generally to computer systems, and more specifically to a multimedia router system and method.

### BACKGROUND

Video conferencing enables remote communication between multiple users, and is becoming a relatively low cost and fast communication tool for people in a plurality of locations. Video conferencing has lately become popular due to a widespread deployment of broadband networks, advancements in video compression technologies, and increased availability of approaches for implementing web-based video communications with lower infrastructure requirements and at low costs.

For example, one such approach enabling video conferencing is a mesh (peer-to-peer) infrastructure, where each client device sends multi-media streams to all other client devices. This represents a low-cost solution that does not require any intermediate infrastructure, but results in a low scalability due to rapid bandwidth overload and limited processing capacity of the client devices.

Another example approach is a multipoint control unit (MCU), which, implemented in a central media server, receives all of the multimedia streams from the client devices decodes and combines all of the streams into one stream that is re-encoded and sent to all client devices, reducing latency and bandwidth problems relative to peer-to-peer models. However, MCU implementation tends to be complex and requires a high amount of computing resources from the media server.

Another example approach is a selective forwarding unit (SFU), which is used in the web real-time communication (WebRTC) video-conferencing standard. The WebRTC standard generally supports browser-to-browser applications such as voice calling, video chat, and peer-to-peer (P2P) file sharing applications, while avoiding the need for plugins to connect video communications endpoints. An SFU, which may be implemented in a central media server computer, comprises software programs configured to route video packets in video streams to multiple participant devices without performing intensive media processing (e.g., decoding and re-encoding) at the server. Thus, an SFU receives over a network all of the encoded media streams from client devices, and then selectively forwards the streams to the client devices of respective participants for subsequent decoding and display. The selectivity of the forwarding of SFU may be based on a plurality of parameters that may be used in an optimization of bandwidth associated with the forwarding of the multimedia streams, resulting in a higher Quality of Experience (QoE). For example, SFU may identify a speaking participant from the received multimedia streams, and may forward high-bit rate multimedia streams to listening participants; on the other hand, SFU may send low-bit rate multimedia streams of the listening participants to the other participants, achieving a certain degree of bandwidth and QoE improvement.

One limitation of typical video conferencing tools, such as through the approaches described above, is the limited scalability considering limitations in bandwidth and processing capacity of either of a central media or routing server or the participating client devices. Therefore, what is required are novel approaches that enable further optimizations of network bandwidth and computing resources during multimedia routing and forwarding operations while keeping a high QoE for relevant participants.

US 2011/185286 A1 discloses a web browser interface for visualizing realtime network communications in spatial communication environments allows communicants to interact with other communicants in an immersive spatial communication environment without having to install any specialized communication software and without requiring special proxies or firewall additions or exceptions.

US 2020/099891 A1 discloses systems and methods for managing user positions in a shared virtual geometry, capturing 360° views of a local user environment in a spatially faithful system, and computing a perspective view of a first user from the eye-point of a second user. Users may move around the shared virtual geometry, and perspective views of users may be updated. Some embodiments use a co-centric geometry for group conferencing with other users. Some embodiments may use a grid-based geometry for exploration with other users. Some embodiments may reduce transferred bitrates to enable systems and methods to be implemented in data-limited environments. Some embodiments support users moving and navigating a shared virtual geometry.

### SUMMARY

The invention is defined in the independent claims. Advantageous embodiments of the invention are subject to the dependent claims and are outlined herein below.

In one aspect of the current disclosure, a spatially-aware multimedia router system is provided. The spatially-aware multimedia router system comprises at least one media server computer comprising at least one processor and memory storing instructions implementing a data exchange management module managing data exchange between client devices. In an embodiment, the system further comprises one or more computing devices implementing at least one virtual environment connected to the at least one media server computer enabling access to one or more graphical representations of users (also referred to as user graphical representations) of the plurality of client devices. A plurality of multimedia streams (e.g., 2D video streams, 3D video streams, audio streams, or combination of such streams or other media streams) are generated from within the virtual environment taking into account virtual elements within the virtual environment and the input data from the at least one client device. Thus, the input data is received and combined within the virtual environment comprising a plurality of virtual elements and the at least one graphical representation of corresponding users of the client devices. The plurality of client devices are connected to the at least one media server computer via a network and are configured to send data comprising multimedia streams to the at least one media server computer.

The at least one media server is configured to receive and analyze incoming data comprising incoming multimedia streams from client devices, and adapt outbound multimedia streams for individual client devices based on the incoming data. The incoming multimedia streams include elements from within at least one virtual environment. The outbound multimedia streams are adapted for the individual client devices based on user priority data and spatial orientation data that describes spatial relationships between corresponding user graphical representations and sources of the incoming multimedia streams within the at least one virtual environment.

In an embodiment, the at least one media server computer performs data exchange management comprising analyzing and processing incoming data comprising multimedia streams from the client devices, and assessing and optimizing the forwarding of the outbound multimedia streams based on the incoming data received from the plurality of client devices including elements from within the at least one virtual environment. The incoming data is associated with user priority data and the spatial relationship between the corresponding user graphical representation and the incoming multimedia streams.

In some embodiments, the at least one virtual environment is hosted on at least one dedicated server computer connected via a network to the at least one media server computer. In other embodiments, the at least one virtual environment is hosted in a peer-to-peer infrastructure and is relayed through the at least one media server computer. The virtual environment may be used for hosting real-time video communications where users may interact with each other, and may be used for meetings, working, education, shopping, entertainment, and servicing, amongst others. In some embodiments, the virtual environment is a virtual replica of a real-world location, wherein the real-world location comprises a plurality of sensors providing further data to the virtual replica of the real-world location.

In some embodiments, the at least one media server computer uses a routing topology. In other embodiments, the at least one media server computer uses a media processing topology. In other embodiments, the at least one media server computer uses a forwarding server topology. In other embodiments, the at least one media server computer uses other suitable multimedia server routing topologies, or a media processing and forwarding server topology, or other suitable server topologies.

In an embodiment where the at least one media server computer uses a routing topology, the at least one media server computer uses a selective forwarding unit (SFU) topology, or a Traversal Using Relay NAT (TURN) a spatially analyzed media server topology (SAMS), or some other multimedia server routing topology.

In an embodiment where the at least one media server computer uses a media processing topology, the at least one media server computer is configured to perform one or more operations on the incoming data comprising compressing, encrypting, re-encrypting, decrypting, decoding, combining, improving, mixing, enhancing, augmenting, computing, manipulating, or encoding, or a combination thereof. In a further embodiment, combining the incoming data is performed in the form of a mosaic comprising separate tiles where the individual multimedia streams of user graphical representations are streamed.

In an embodiment where the at least one media server computer uses a forwarding sever topology, the at least one media server computer is configured as a multipoint control unit (MCU), or a cloud media mixer, or a cloud 3D renderer.

In an embodiment of the at least one media server computer being configured as a SAMS, the at least one media server computer is configured to analyze and process the incoming data of each client device related to user priority and spatial relationships (e.g., the spatial relationships between the corresponding user graphical representation and the sources of incoming multimedia streams). In such an embodiment, the at least one media server computer may be further configured to determine user priority and/or spatial relationships based on such data. The incoming data comprises, in certain embodiments, one or more of the following: meta-data, priority data, data classes, spatial structure data, scene graphs, three-dimensional positional, orientation or locomotion information, speaker or listener status data, availability status data, image data, or scalable video codec-based video, or a combination thereof. In further embodiments, adapting the outbound multimedia streams (e.g., as implemented by the at least one media server computer implementing a SAMS) comprises optimizing bandwidth and computing resource utilization for the one or more receiving client devices. The adapting of the outbound multimedia streams also may include adapting temporal features, spatial features, quality, or color features, or a combination thereof. In yet further embodiments, the SAMS optimizes the forwarding of the outbound data streams to each receiving client device by modifying, upscaling or downscaling the media for temporal features, spatial features, quality, and color features.

In another aspect of the current disclosure, a spatially-aware multimedia router method is provided. The spatially-aware multimedia router method comprises providing, in memory of at least one media server computer, data and instructions implementing a client devices data exchange management module managing data exchange between a plurality of client devices. The method proceeds by receiving, by at least one media server computer, incoming data comprising incoming multimedia streams from the plurality of client devices, wherein the incoming data is associated with user priority data and spatial orientation data. For example, the spatial orientation data may describe, e.g., the spatial relationships between corresponding user graphical representations and one or more sources of the incoming multimedia streams. Subsequently, the method continues by performing, by the data exchange management module, data exchange management. In an embodiment, the data exchange management comprises analyzing and/or processing the incoming data from the plurality of client devices including graphical elements from within the virtual environment; and adapting the outbound multimedia streams based on the incoming data received from the plurality of client devices. The method ends by forwarding the adapted outbound multimedia streams to one or more receiving client devices, wherein the adapted outbound multimedia streams are configured to be displayed (e.g., to users represented with user graphical representations) at the receiving client device(s). The outbound multimedia streams are adapted for the individual client devices based on user priority data and spatial orientation data that describes spatial relationships between corresponding user graphical representations and sources of the incoming multimedia streams within the at least one virtual environment.

In some embodiments, the method further comprises, when forwarding the outbound multimedia streams, utilizing a routing topology, or a media processing topology, or a forwarding server topology, or other suitable multimedia server routing topologies, or a media processing and forwarding server topology, or other suitable server topologies.

In some embodiments, in a routing topology, the at least one media server computer uses a selective forwarding unit (SFU) topology, a Traversal Using Relay NAT (TURN) a spatially analyzed media server topology (SAMS), or another multimedia server routing topology.

In some embodiments, in a media processing topology, the at least one media server computer is configured to perform one or more media processing operations on the incoming data comprising compressing, encrypting, re-encrypting, decrypting, decoding, combining, improving, mixing, enhancing, augmenting, computing, manipulating, or encoding, or a combination thereof.

In some embodiments, the method further comprises, when utilizing a forwarding server topology, utilizing one or more of Multipoint Control Units (MCUs), cloud media mixers, and cloud 3D renderers.

In some embodiments, using a SAMS configuration, the method further comprises analyzing and processing the incoming data of each client device related to user priority and spatial relationships (e.g., the distance relationships or other spatial relationships between the corresponding user graphical representation and the sources of incoming multimedia streams). In such an embodiment, the method may further include determining user priority and/or spatial relationships based on such data. The incoming data comprises one or more of the following: meta-data, priority data, data classes, spatial structure data, scene graphs, three-dimensional positional, orientation or locomotion information, speaker or listener status data, availability status data, image data, and scalable video codec-based video, or a combination thereof.

In some embodiments, adapting the outbound multimedia streams (e.g., as implemented by the at least one media server computer implementing a SAMS) comprises optimizing bandwidth and computing resource utilization for the one or more receiving client devices. The adapting of the outbound multimedia streams also may include adapting temporal features, spatial features, quality, or color features, or a combination thereof. In further embodiments, the SAMS optimizes the forwarding of the outbound data streams to each receiving client device by modifying, upscaling or downscaling the media for temporal features, spatial features, quality, and color features.

In another aspect of the current disclosure, computer readable media have instructions stored thereon, which are configured to cause one or more computing devices to perform any of the techniques described herein. In an embodiment, at least one computer readable medium has stored thereon instructions configured to cause at least one media server computer comprising a processor and memory to perform steps comprising receiving, by at least one media server computer, incoming data comprising incoming multimedia streams from a plurality of client devices, wherein the incoming data is associated with spatial orientation data that describes spatial relationships between one or more user graphical representations and at least one element of at least one virtual environment; analyzing the incoming data from the plurality of client devices; adapting the outbound multimedia streams based on the incoming data received from the plurality of client devices; and forwarding the adapted outbound multimedia streams to receiving client devices, wherein the adapted outbound multimedia streams are configured to be displayed at the receiving client devices.

The above summary does not include an exhaustive list of all aspects of the present disclosure. It is contemplated that the disclosure includes all systems and methods that can be practiced from all suitable combinations of the various aspects summarized above, as well as those disclosed in the Detailed Description below, and particularly pointed out in the claims filed with the application. Such combinations have advantages not specifically recited in the above summary. Other features and advantages of the present invention will be apparent from the accompanying drawings and from the detailed description that follows below.

### BRIEF DESCRIPTION OF THE DRAWINGS

Specific features, aspects and advantages of the present disclosure will be better understood with regard to the following description and accompanying drawings, where:
**FIG. 1** shows a schematic representation of a conventional selective forwarding unit (SFU) routing topology.
**FIG**. **2** shows a schematic representation of a spatially-aware multimedia router system, according to an embodiment.
**FIG. 3** shows a schematic representation of a system comprising at least one media server computer configured as a SAMS, according to an embodiment **FIG. 4A** shows a schematic representation of a virtual environment.
**FIG. 4B** shows a schematic representation of the forwarding of outbound media streams from a speaking user within the virtual environment employing a SAMS topology of the current disclosure, according to an embodiment.
**FIGS. 5A-5B** show a schematic representation of a usage scenario where a SAMS combines media streams of a plurality of client devices, according to an embodiment.
**FIG. 6** depicts a block diagram of a spatially-aware multimedia router method of the current disclosure, according to an embodiment.

### DETAILED DESCRIPTION

In the following description, reference is made to drawings which show by way of illustration various embodiments. Also, various embodiments will be described below by referring to several examples.

The current disclosure provides a spatially-aware multimedia router system and method configured to receive input data from a plurality of client devices, and implement data exchange management on the input data. The input data is received and combined within a virtual environment comprising a plurality of virtual elements and at least one graphical representation of corresponding users of the client devices. The virtual environment may be used for hosting real-time video communications where users may interact with each other, and may be used for meetings, working, education, shopping, entertainment, and servicing, amongst others. The data exchange management comprises analyzing and processing incoming data comprising at least multimedia streams (e.g., 2D video streams, 3D video streams, audio streams, or combinations of such streams or other media streams) from the client devices, and assessing and optimizing the forwarding of the outbound multimedia streams based on the incoming data received from the plurality of client devices including elements from within the at least one virtual environment. The incoming data is associated to user priority data and the spatial relationship between the corresponding user graphical representation and the incoming multimedia streams. Therefore, the system and method of the current disclosure enables the routing of the multimedia streams that are received by the client devices to take place within a virtual environment while simultaneously optimizing the input data and the forwarding of the outbound multimedia streams so that an optimal selection of the receiving client devices is performed, enabling at the same time efficiencies in bandwidth and computing resources. These efficiencies can make the spatially-aware multimedia router system and method of the current disclosure a viable and effective option for processing of multi-user video conferencing comprising large numbers (e.g., hundreds or thousands) of users accessing a virtual environment.

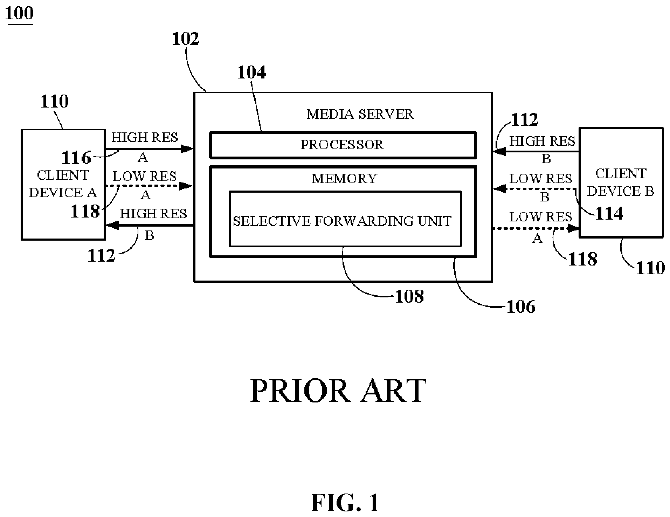

**FIG. 1** shows a schematic representation of a conventional selective forwarding unit (SFU) routing topology **100.**

The example conventional SFU routing topology **100** comprises at least one media server computer **102** with at least one processor **104** and memory **106** storing computer programs implementing an SFU **108** for providing video forwarding in real-time video applications. A plurality of client devices **110** may communicate in real-time through the SFU **108,** wherein the SFU **108** forwards outbound media streams including real-time transport protocol (RTP) video packets to the client devices **110** based on one or more parameters. For example, a client device **B** may represent a current speaker during a real-time communication with client device **A.** Client device **B** sends two or more media streams to the client device **A,** wherein, for example, one media stream is sent at high resolution (B) **112** and one media stream at low resolution (B) **114.** Further in this example, client device **A** may also send two or media streams to client device **B,** such as one media stream at high resolution (A) **116** and one media stream at low resolution (A) **118.** Client device **B** may receive the low resolution (A) **118** media stream from client device **A,** as client device **A** may be used by a passive user that is only listening at that moment to the user of client device **B.** Client device **A,** on the other hand, may receive the high resolution (B) **112** media stream from client device **B,** as the user of client device **B** may be an active user currently speaking. The at least one media server computer **102** and two or more client devices **110** may connect through a network, such as one or more wired or wireless communication networks (e.g., local area network (LAN), wide area network (WAN), the Internet, paths, links, and any intermediary nodes network hardware such as routers, gateways, firewalls, switches, and the like). The video applications may utilize, for example, the WebRTC standard for implementing multi-party video conferencing applications.

The SFU routing topology **100** may include limitations, such as having to forward each media stream to of each client device **110** regardless of the status of the client device **110;** not enabling media modifications, such as data operations on the media streams (e.g., augmenting, enhancing, combining, etc.); and considering limited parameters to prioritize and optimize the outbound media streams, resulting in a suboptimal network bandwidth and resources optimization for the system, ultimately limiting the number of users that can interact and view the multimedia streams simultaneously. Finally, the conventional SFU routing topology **100** is not optimum for enabling video communications and interactions, such as social interactions, in virtual environments.

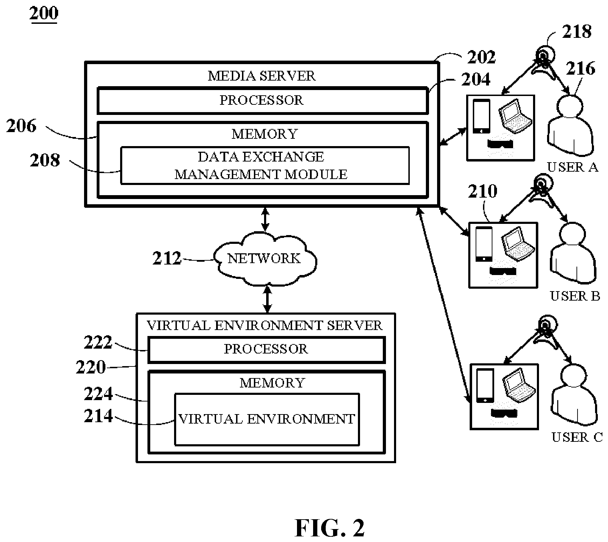

**FIG. 2** shows a schematic representation of a spatially-aware multimedia router system **200,** according to an embodiment.

The spatially-aware multimedia router system **200** comprises at least one media server computer **202** comprising at least one processor **204** and memory **206** storing instructions implementing a data exchange management module **208** managing data exchange between client devices **210** connected to the at least one media server computer **202** via a network **212.** The spatially-aware multimedia router system **200** may further comprise at least one virtual environment server **220** connected to the at least one media server computer **202** enabling access to one or more user graphical representations of users **216** of the plurality of client devices **210** in a virtual environment **214.** A plurality of multimedia streams are generated from within the virtual environment **214** comprising multimedia streams obtained by cameras **218** obtaining live feed data from the one or more users **216** and graphical elements from within the virtual environment.

The at least one media server computer **202** is a server computing device comprising resources (e.g., the at least one processor **204** and memory **206** along with network access capabilities) for performing techniques disclosed herein, such as storing, processing, routing and forwarding the input data received from the plurality of client devices **210.** The at least one media server computer **202** performs client devices data exchange management through the data exchange management module **208,** comprising analyzing and processing incoming data comprising the multimedia streams from the client devices **210** including graphical elements from within the virtual environment **214,** and adapting outbound multimedia streams. In an embodiment, this includes assessing and optimizing the forwarding of the outbound multimedia streams based on the incoming data received from the plurality of client devices **210.** The outbound multimedia streams are adapted for the individual client devices based on the incoming data user priority data and spatial orientation data that describes spatial relationships between corresponding user graphical representations and sources of the incoming multimedia streams within the at least one virtual environment. In an embodiment, the incoming data is associated with the spatial relationship between the one or more user graphical representations and at least one element of the at least one virtual environment **214.**

The at least one virtual environment **214** is, in some embodiments, a virtual replica of a real-world location. The real-world location may comprise a plurality of sensors providing real-world data to the virtual replica of the real-world location through the virtual environment **214.** The sensors may send the captured data to the virtual environment server **220** through the network **212,** which may be utilized by the at least one media server **202** to update, enrich and synchronize corresponding virtual replicas of the real-world elements in the at least one virtual environment. Furthermore, the one or more media servers **202** may be further configured to merge the real-world data captured by the sensors and the virtual data in the virtual environment **214** into the virtual environment **214** in order to augment the real-world data with the virtual data.

In the current disclosure, the term "enriching" is used to describe the act of providing further properties to a virtual replica based on multi-source data. Enriching a virtual replica may be considered a special form of updating the virtual replica with one or more new forms of data that may not have been previously present in the virtual replica. For example, enriching the virtual replicas may refer to providing real-world data captured from sensing mechanisms on a plurality of devices. The further real-world data may comprise, for example, video data, temperature data, real-time energy consumption data, real-time water consumption data, speed or acceleration data, or the like.

In one embodiment, the at least one virtual environment **214** is hosted on at least one virtual environment server computer **220** comprising at least one processor **222** and memory **224** implementing the virtual environment **214.** In another embodiment, the at least one virtual environment **214** is hosted in a peer-to-peer (P2P) infrastructure and is relayed through the at least one media server computer **202** to the plurality of client devices **210.**

The arrangement of the at least one virtual environment **214** may be associated to one or more themes, such as for meetings (e.g., as a virtual conference room), working (e.g., as a virtual office space), education (e.g., as a virtual classroom), shopping (e.g., as a virtual shop), entertainment (e.g., karaokes, event halls or arenas, theaters, nightclubs, sports fields or stadiums, museums, cruise ships, video games, etc.) and servicing (e.g., hotels, tour agencies, or restaurant bookings or ordering, government agency services, etc.,). A combination of virtual environments **214** from the same and/or different themes may form a virtual environment cluster, which may comprise hundreds or even thousands of virtual environments (e.g., a plurality of virtual classrooms may be part of a virtual school). The virtual environment **214** may be a 2D or 3D virtual environment comprising a physical arrangement and visual appearance associated to the theme of the virtual environment **214,** which may be customized by the users depending on their preferences or needs. The users may access the virtual environment **214** through a graphical representation that may be inserted into the virtual environment **214** and graphically combined with the two-or-three dimensional virtual environment **214.**

Each of the virtual environments **214** may be provided corresponding resources (e.g., memory, network and computing power) by the at least one virtual environment server computer **220** or P2P infrastructure. The at least one virtual environment **214** may be accessed by one or more users **216** through a graphical user interface via a client device **210.** The graphical user interface may be comprised in a downloadable client application or a web browser application, using, for example, a WebRTC standard, providing the application data and instructions required to execute the selected virtual environment **214** and therein enable a plurality of interactions. Furthermore, each of the virtual environments **214** may include one or more human or artificial intelligence (AI) hosts or assistants that may assist users within the virtual environment **214** by providing required data and/or services through their corresponding user graphical representation. For example, a human or AI bank service clerk may assist a user of a virtual bank by providing required information in the form of presentations, forms, lists, etc., as required by the user.

In some embodiments, the user graphical representation is a user 3D virtual cutout, which may be constructed from one or more input images, such as a user-uploaded or third-party-source photo with a removed background; or a user real-time 3D virtual cutout with a removed background, which may be generated based on input data such as real-time 2D, stereo, or depth image or video data, or 3D video data in a live video stream data feed obtained from the camera, comprising a real-time video stream of the user, or a video without removed background, or a video with removed background. In some embodiments, the user graphical representation may be rendered and displayed utilizing a polygonal structure. Such polygonal structures can be a quad structure or more complex 3D structures used as a virtual frame to support the video. In yet other embodiments one or more of the user graphical representations are inserted into three dimensional coordinates within a virtual environment **214** and are therein graphically combined.

In the current disclosure, the term "user 3D virtual cutout" refers to a virtual replica of a user constructed from a user-uploaded or third-party-source 2D photo. The user 3D virtual cutout is created via a 3D virtual reconstruction process through machine vision techniques using the user-uploaded or third-party-source 2D photo as input data, generating a 3D mesh or 3D point cloud of the user with removed background. In the current disclosure, the term "user real-time 3D virtual cutout" refers to a virtual replica of a user based on the real-time 2D or 3D live video stream data feed obtained from the camera and after having the user background removed. The user real-time 3D virtual cutout is created via a 3D virtual reconstruction process through machine vision techniques using the user live data feed as input data by generating a 3D mesh or 3D point cloud of the user with removed background. In the current disclosure, the term "video with removed background" refers to a video streamed to a client device, wherein a background removal process has been performed on the video so that only the user may be visible and then displayed utilizing a polygonal structure on the receiving client device. In the current disclosure, the term "video without removed background" refers to a video streamed to a client device, wherein the video is faithfully representing the camera capture, so that the user and his or her background are visible and then displayed utilizing a polygonal structure on the receiving client device.

The P2P infrastructure may use a suitable P2P communication protocol enabling real-time communication between client devices **210** in the virtual environment **214** through suitable application programming interfaces (APIs), enabling real-time interactions and synchronizations thereof. An example of a suitable P2P communication protocol may be a WebRTC communication protocol, which is collection of standards, protocols, and JavaScript APIs, which, in combination, enable P2P audio, video, and data sharing between peer client devices **210.** Client devices **210** using the P2P infrastructure may perform real-time 3D rendering of the live session employing, for example, one or more rendering engines. Exemplary rendering engines may be 3D engines based on WebGL, which is a JavaScript API for rendering 2D and 3D graphics within any compatible web browser without the use of plug-ins, allowing accelerated usage of physics and image processing and effects by one or more processors of the at least one client device **210** (e.g., one or more graphic processing units (GPUs)). Furthermore, client devices **210** using the P2P infrastructure may perform image and video-processing and machine-learning computer vision techniques through one or more suitable computer vision libraries. An example of a suitable computer vision library may be OpenCV, which is a library of programming functions configured mainly for real-time computer vision tasks.

In some embodiments, the at least one media server computer **202** uses a routing topology. In another embodiment, the at least one media server computer **202** uses a media processing topology. In another embodiment, the at least one media server computer **202** uses a forwarding server topology. In another embodiment, the at least one media server computer **202** uses other suitable multimedia server routing topologies, or a media processing and forwarding server topology, or other suitable server topologies. The topology used by the at least one media server computer **202** may depend on the processing capacities of the client devices and/or of the at least one media server computer, as well as the capacities of the network infrastructure being utilized.

In some embodiments, in a media processing topology, the at least one media server computer **202** is configured to perform one or more media processing operations on the incoming data comprising compressing, encrypting, re-encrypting, decrypting, decoding, combining, improving, mixing, enhancing, augmenting, computing, manipulating, encoding, or a combination thereof. Thus, the at least one media server computer **202,** in a media processing topology, is not only configured to route and forward the incoming data, but also to perform a plurality of media processing operations that may enhance or otherwise modify the outbound multimedia streams to client devices **210.**

In some embodiments, in a forwarding server topology, the at least one media server computer **202** is configured as a multipoint control unit (MCU), or a cloud media mixer, or a cloud 3D renderer. As an MCU, the at least one media server computer **202** is configured to receive all of the multimedia streams from the client devices and decode and combines all of the streams into one stream that is re-encoded and sent to all client devices **210.** As a cloud media mixer the at least one media server computer **202** is configured to choose between different multimedia sources (e.g., audio and video), such as from the various client devices **210** and the at least one virtual environment **214,** and to mix the input data multimedia streams along with adding footage and/or special effects in order to create the processed output multimedia streams for the client devices **210.** Visual effects may range from, for example, simple mixes and wipes to elaborate effects. As a cloud 3D renderer, the at least one media server computer **202** is configured to calculate 3D scenes from the virtual environment through a large number of computer calculations to generate the final animated multimedia streams that are sent back to the client devices **210.**

In a routing topology, the at least one media server computer **202** is configured to decide where (e.g., which of the one or more of the client devices **210)** to send the multimedia streams, which may be performed through an Internet Protocol (IP) routing table to choose an interface that is the best route. Such a routing decision in the routing tables may be based on rules stored in the data exchange management module **208** considering the priority data and the spatial relationship between the corresponding user graphical representation and the incoming multimedia streams, so that an optimal selection of the receiving client devices **210** is performed. In some embodiments, as a routing topology, the at least one media server computer uses a selective forwarding unit (SFU) topology, or a Traversal Using Relay NAT (TURN) topology, or a spatially analyzed media server topology (SAMS), or some other multimedia server routing topology.

The SFU, as explained with reference to **FIG. 1****,** is used in the WebRTC video-conferencing standard, which generally supports browser-to-browser applications such as voice calling, video chat, and P2P file sharing applications, while avoiding the need for plugins to connect video communications endpoints. SFU comprises software programs configured to route and forward video packets in video streams to multiple participant devices without performing intensive media processing operations such as decoding and re-encoding, receiving all of the encoded media streams from client devices, and then selectively forwarding the streams to the respective participants for decoding and presentation.

The TURN topology, which may be suitable in situations where the at least one media server computer **202** cannot establish a connection between the client devices **210,** is an extension of Session Traversal Utilities for NAT (STUN), wherein NAT stands for Network Address Translation. NAT is a method of remapping an Internet Protocol (IP) address space into another by modifying network address information in the IP header of packets while they are in transit across a traffic routing device. Thus, NAT can give private IP addresses access to a network such as the Internet, and allows single devices, such as routing devices, to act as an agent between the Internet and a private network. NAT can be symmetric or asymmetric. A framework called Interactive Connectivity Establishment (ICE), which is configured to find the best path to connect client devices, may determine whether symmetric or asymmetric NAT may be required. Symmetric NAT not only does the job of translating the IP address from private to public, and vice-versa, but also translates ports. Asymmetric NAT, on the other hand, uses STUN servers to allow clients to discover their public IP address and the type of NAT they are behind, which may be used to establish a connection. In many cases, STUN may be used only during the connection setup and once that session has been established, data may start flowing between client devices. TURN may be used in the case of symmetric NAT, and may remain in the media path after the connection has been established while the processed and/or unprocessed data is being relayed between client devices.

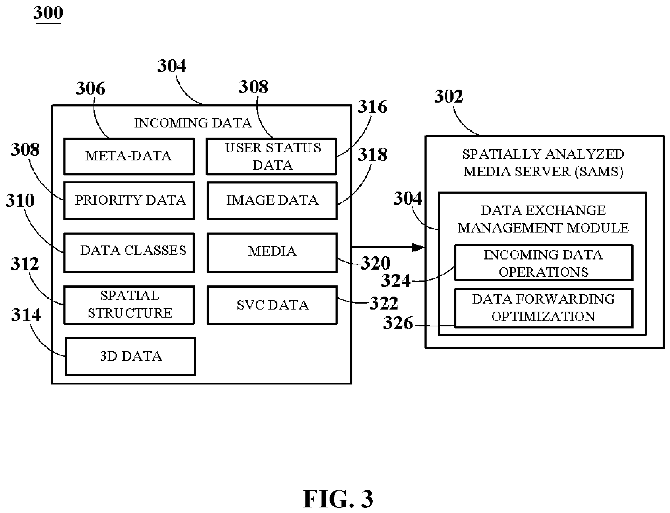

**FIG. 3** shows a schematic representation of a system **300** comprising at least one media server computer configured as a SAMS **302,** according to an embodiment. Some elements of **FIG. 3** may refer to similar elements than **FIG. 2****,** and thus may use the same reference numerals.

The SAMS **302** is configured to analyze and process incoming data **304** of each client device. The incoming data **304** may, in some embodiments, be related to user priority and the distance relationship between the corresponding user graphical representation in the virtual environment and the multimedia streams. The incoming data **302** comprises one or more of meta-data **306,** priority data **308,** data classes **310,** spatial structure data **312,** scene graphs (not shown), three-dimensional data **314** comprising positional, orientation or locomotion data, user availability status data (e.g., active or passive status) **316,** image data **318,** media **320,** and scalable video codec (SVC)-based video data **322,** or a combination thereof. The SVC-based video data **322** may enable sending the data, by the client devices, comprising different resolutions without the need to send two or more streams, each stream per resolution.

The incoming data **304** is sent by the client devices, which, in the context of an application being run by the client devices that is executed in the virtual environment, generates the incoming data **304** that is used by SAMS **302** to perform incoming data operations **324** and data forwarding optimization **326.** Thus, the SAMS **302** may not need to store information about the virtual environment, the distance relationships between user graphical representations, availability statuses, etc., as the data is already included in the incoming data sent by the client devices in regard to the application being run in the virtual environment, generating processing efficiencies for the SAMS **302.** These efficiencies can make the SAMS **302** a viable and effective option for processing of multi-user video conferencing comprising large numbers (e.g., hundreds or thousands) of users accessing a virtual environment, as the SAMS **302** may concentrate its resources only on the data operations, routing and forwarding optimizations before sending the multi-media streams to the client devices. Alternatively, the incoming data **304** may include pre-processed spatial forwarding guidance, in which data forwarding calculations have already been performed. In this situation, the SAMS **302** may simply use this guidance to send multimedia streams to the client devices without performing additional calculations.

In some embodiments, the incoming data operations **326** implemented by the at least one media server computer implementing the SAMS may comprise compressing, encrypting, re-encrypting, decrypting, improving, mixing, enhancing, augmenting, computing, manipulating, encoding, or a combination thereof on the incoming data. These incoming data operations **326** may be performed per client instance depending on the priority and spatial relationships (e.g., distance relationships) of the user graphical representations with the multimedia stream's source and the remaining user graphical representations.

In some embodiments, the data forwarding optimization **326** implemented by the at least one media server computer implementing the SAMS comprises optimizing bandwidth and computing resource utilization for the one or more receiving client devices. In further embodiments the SAMS optimizes the forwarding of the outbound data streams to each receiving client device by modifying, upscaling or downscaling the media for temporal features, spatial features, quality, and color features. Such modifying, upscaling or downscaling of the incoming data for temporal features may comprise, for example, varying the frame rate; the spatial features may refer to, for example, image size; the quality refers to, for example, different compression or encoding based qualities; and the color refers to, for example, color resolution and range. These operations are performed based on the specific receiving client device user's spatial, three dimensional orientation, distance and priority relationship to such incoming data, and may contribute to the optimization of the bandwidth and computing resources.

The priority data is associated to, for example, the speaker or listener status data, wherein the one or more multimedia streams from a speaker have a higher priority score than the multimedia streams of a listener. The spatial relationship comprises associating a direct correlation between the distance and orientation of a user graphical representation with respect to a virtual multimedia stream's source and the remaining user graphical representations. Thus, the spatial relationship associates providing higher resolution or more enhanced multimedia streams to user graphical representations closer to and facing a virtual multimedia stream's source and lower resolution or less enhanced multimedia streams to user graphical representations farther from and partially facing or not facing the multimedia stream's source. Any combinations in-between may also apply, such as user graphical representations partially facing the multimedia stream's source at any degree of face and head orientation and any distance from the multimedia stream's source, having a direct effect in the quality of the multimedia stream received by the user.

The multimedia stream's source may be, for example, a user speaking in a virtual video-conference taking place within the virtual environment, a panel of speakers engaging in a debate or conference within the virtual environment, a webinar, an entertainment event, a show, etc., wherein at least one user is a speaker. In an example of a user speaking (e.g., giving a speech, webinar, conference, etc.), a plurality of users may be located within the virtual environment listening to the speaker. Some of the users may face, partially face, or not face the speaker, affecting the priority for each user and thus the quality of the multimedia streams received. However, in other embodiments, the multimedia streams may not come from other user graphical representations, but rather from other multimedia sources, such as virtual animations, augmented reality virtual objects, pre-recorded or live videos from events or places, application graphical representations, video games, etc., wherein the data operations are performed based on the specific receiving client device user's spatial, three dimensional orientation, distance and priority relationship to such multimedia streams.

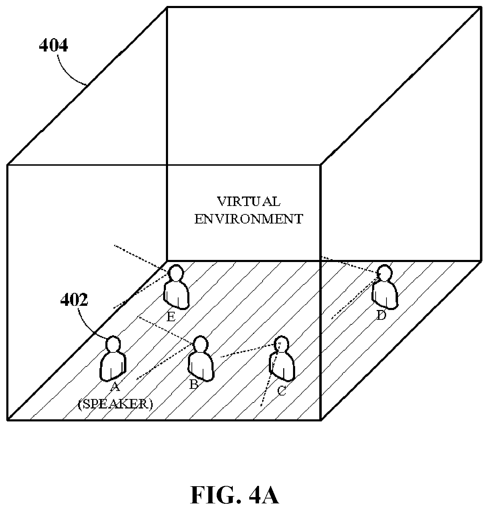

**FIG. 4A** shows a schematic representation of a virtual environment **400** in which a SAMS topology of the current disclosure may be employed, according to an embodiment.

The virtual environment **400** comprises five user graphical representations **402,** namely user graphical representations **A-E,** wherein user graphical representation **A** represents a speaker and user graphical representations **B-E** represent four listeners, each located in a different 3D coordinate position of the virtual environment **400** and having a different face and head orientation along with a different point of view (PoV). Each user graphical representation **402** is associated with a corresponding user that is interacting in the virtual environment **404** through a client device connected to the virtual environment **404** and to at least one media server computer using a SAMS topology of the current disclosure, such as the SAMS **302** disclosed with reference to **FIG. 3****.**

While user graphical representation **A** is speaking, user graphical representations **B-E** may be facing each at their individual orientations (e.g., the same or different orientations) and corresponding PoVs, along with different 3D coordinates. For example, user graphical representation **B** is located closest to user graphical representation **A** and is looking directly at user graphical representation **A;** user graphical representation **C** is located slightly farther away than user graphical representation **B** and is looking partially in the direction of user graphical representation **A;** user graphical representation **D** is located the farthest away from user graphical representation **A** may be looking partially in the direction of user graphical representation **A;** and user graphical representation **E** is as close to user graphical representation **A** as user graphical representation **B** but may be looking in a direction different than user graphical representation **A.**

Accordingly, the SAMS captures the incoming data from each of the five user graphical representations, performs input data operations and data forwarding optimizations, and selectively sends the resulting multimedia streams to the five client devices. Thus, each client device sends their own input data and receive correspondingly one or more multimedia streams (e.g., the four multimedia streams, one of each other user graphical representation in **FIG. 4A****),** wherein each received multimedia stream is individually adapted (e.g., managed and optimized) for the corresponding user graphical representation based on the specific receiving client device user's spatial, three dimensional orientation, distance and priority relationship to such incoming data to achieve optimal bandwidth and computing resources.

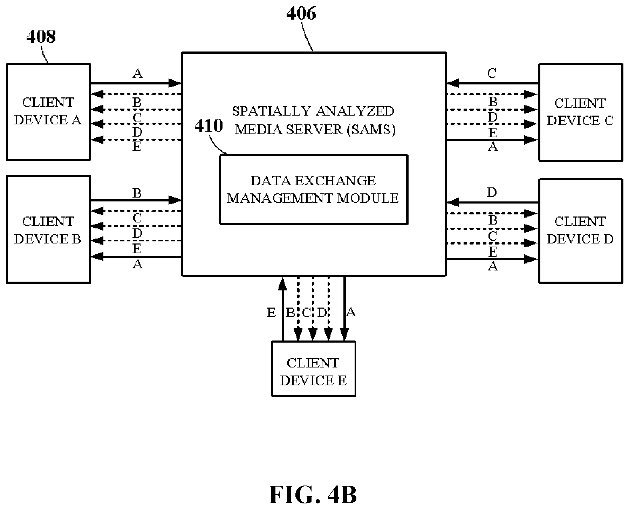

**FIG. 4B** shows a schematic representation of the forwarding of adapted outbound media streams from the five user graphical representations the virtual environment **404** of **FIG. 4A** employing a SAMS **406** topology of the current disclosure, according to an embodiment. The SAMS **406** may analyze and optimize incoming data comprising the multimedia streams from the client devices **408** corresponding to the user graphical representations of **FIG. 4A****,** and assess and optimize the forwarding of the outbound multimedia streams based on the incoming data received from the plurality of client devices **408** including elements from within the at least one virtual environment **404 of** **FIG. 4A****.** Said data operations and optimizations may be performed by the data exchange management module **410** of SAMS **406.**

Each client device **408** sends their own input data to the SAMS **402** and receives correspondingly the four multimedia streams of the other client devices **408.** Thus, client device **A,** because it is being used by a speaker, sends the incoming media streams with high priority data to the SAMS **402,** and receives four lower priority multimedia streams **B-E** from the corresponding four client devices **408.**

As user graphical representation **B** is located closest to user graphical representation **A** and is looking directly at user graphical representation **A,** client device **B** receives the multimedia streams from client **A** at the highest resolution when compared to the remaining users, receives the remaining multimedia streams **C-E,** each at their own resolution based on the spatial relationship with user graphical representations **C-E,** and sends his or her own corresponding multimedia stream **B.**

Client device **C,** because the user graphical representation **C** is located slightly farther away than user graphical representation **B** and is looking partially in the direction of user graphical representation **A,** receives the third highest resolution from client device **A,** receives the remaining multimedia streams **B-E**, each at their own resolution based on the spatial relationship with user graphical representations **B-E**, and sends his or her own corresponding multimedia stream **C.**

Client device **D,** since the corresponding user graphical representation **D** is located the farthest away from user graphical representation **A** and is looking partially in the direction of user graphical representation **A,** receives the lowest resolution from client device **A,** receives the remaining multimedia streams **B, C** and **E,** each at their own resolution based on the spatial relationship with user graphical representations **B, C** and **E,** and sends his or her own corresponding multimedia stream **D.**

Client device **E,** because the user graphical representation **E** is as close to user graphical representation **A** as user graphical representation **B** but may be looking in a direction different that user graphical representation **A,** receives the second highest resolution, receives the remaining multimedia streams **B-D**, each at their own resolution based on the spatial relationship with user graphical representations **B-D**, and sends his or her own corresponding multimedia stream **E.** However, depending on the configuration of SAMS **402,** the client device **E** may also receive the same resolution as that of client device **B,** even though the user graphical representation **E** is looking slightly away from the user graphical representation **A.** This is because even though user graphical representation **E** may not be looking directly at user graphical representation **A,** user graphical representation **E** might suddenly turn his or her perspective within the virtual world **404** to look toward user graphical representation **A,** and in the absence of a multimedia stream from user graphical representation **A,** or if the multimedia stream from the user graphical representation **A** is at a low resolution despite the close distance between each other, then the quality of experience of the corresponding client device **E** may be disturbing or non-optimal. Thus, in this embodiment, it may be more efficient to consider the same resolution of that received by the client device **B.**

As may be appreciated from the description, the multimedia streams received by each user graphical representation **402** from the remaining four user graphical representations **402** are also individually managed and optimized for the corresponding user graphical representation spatial, three dimensional orientation, distance and priority relationship to the multimedia streams of the other user graphical representations. Thus, each of the client devices **408** receives an individual multimedia stream from the remaining four client devices if the multimedia streams are relevant for the corresponding client device **408.**

In some embodiments, if a user graphical representation **402** is located too far away from the multimedia source, such as in the illustration of **FIG. 4A****,** from user **A,** the user graphical representation **402** may be spared by the SAMS **406** from receiving the multimedia streams from the multimedia source. This may apply, for example, to user graphical representation **D** if the SAMS **406** is accordingly configured.

In some embodiments, the multimedia streams may not come from other user graphical representations, but rather from other multimedia sources, such as virtual animations, augmented reality virtual objects, pre-recorded or live videos from events or places, application graphical representations, video games, etc. In these embodiments, multimedia streams are still adaptable and may, e.g., be individually managed and optimized for the corresponding user graphical representation spatial, three dimensional orientation, distance and priority relationship to the multimedia streams of the received multimedia stream source. In other embodiments, the multimedia streams come from a combination of the user graphical representations and other multimedia sources.

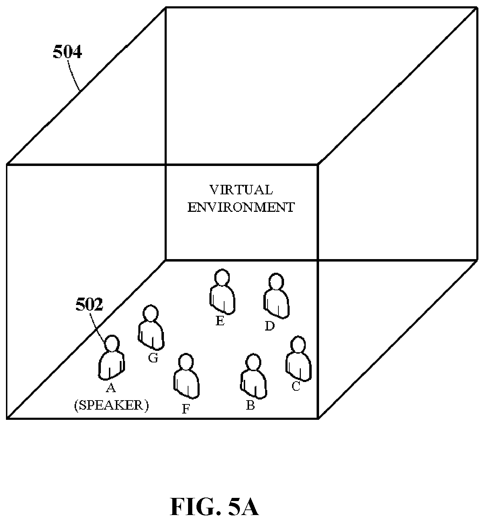

**FIGS. 5A-5B** show a schematic representation where SAMS combines media streams of a plurality of client devices, according to an embodiment. In an embodiment where SAMS may be configured to combine the media streams of the plurality of client devices, SAMS may combine the streams in the form of a mosaic. The mosaic may be a virtual frame comprising separate virtual tiles where the individual multimedia streams of user graphical representations are streamed. The mosaic may be adjusted per client device depending on the client device's user graphical representation distance relationships with the multimedia streams source and the remaining user graphical representations.

In **FIG. 5A****,** seven user graphical representations **502** are interacting within a virtual environment **504,** wherein user graphical representation **A** is a speaker, and the remaining user graphical representations **B-G** are listening to user graphical representation **A.** User graphical representations **G** and **F** are found relatively close to the user graphical representation **A;** user graphical representations **E** and **F** may be located relatively farther away from the user graphical representation **A;** and user graphical representations **D** and **C** may be located the farthest away from the user graphical representation **A.**

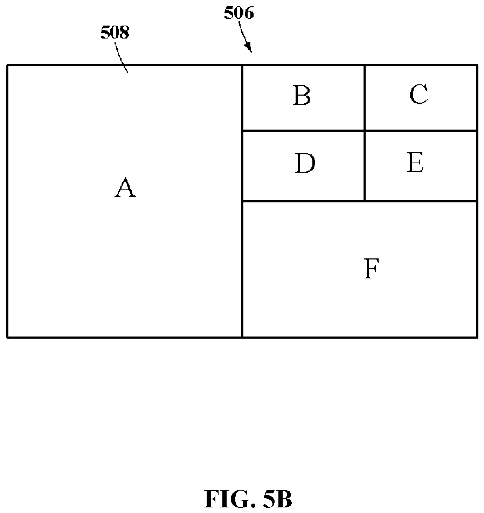

**FIG. 5B** depicts a combined multimedia stream in the form of a mosaic **506** comprising separate virtual tiles **508,** virtual tiles **A-F,** streaming each of the individual multimedia streams from the corresponding user graphical representations **502** in the virtual environment **504** from the perspective of user graphical representation **G.** From the perspective of the user graphical representation **G,** virtual tile **A** may be the larger one, provided at the highest resolution, because user graphical representation **A** has a higher priority for its outbound media streams because of being a speaker; virtual tile **F** may be the second largest one, provided at the second highest resolution, because user graphical representation **G** is also very close to user graphical representation **F;** and user graphical representations **B-E** may be equally small and may have the same or a similar relatively low resolution amongst each other. In some embodiments, the SAMS **406** may send the same mosaic **506** to all client devices, and the client devices may proceed by cutting out the unnecessary tiles that may not be relevant to their position and orientation in the virtual environment.

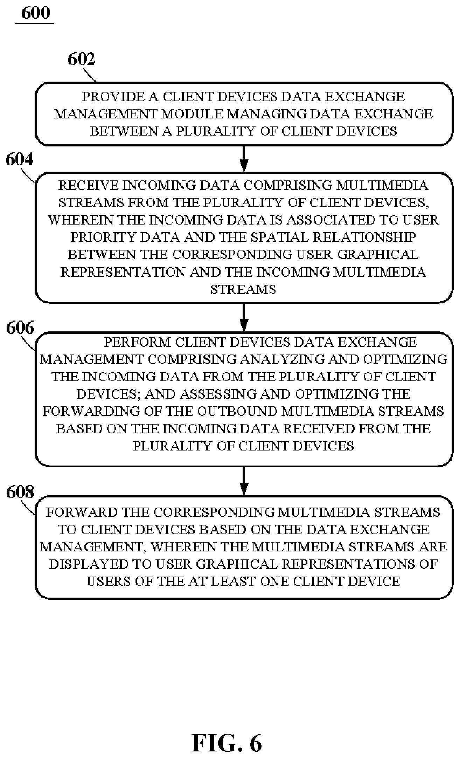

**FIG. 6** depicts a block diagram of a spatially-aware multimedia router method **600** topology of the current disclosure, according to an embodiment. Method **600** may be implemented in a system such as disclosed with reference to systems **200** and **300** of **FIGS. 2-3****.**

Method **600** begins in step **602** by providing, in memory of at least one media server computer data and instructions implementing a client devices data exchange management module managing data exchange between a plurality of client devices.

Then, in step **604,** the method **600** proceeds by receiving, by at least one media server computer, incoming data comprising at least multimedia streams from the plurality of client devices. Said incoming data is associated with user priority data and the spatial relationship between the corresponding user graphical representation and the incoming multimedia streams.

In step **606,** the method **600** proceeds by performing, by the data exchange management module, client devices data exchange management. The data exchange management may comprise analyzing and processing the incoming data from the plurality of client devices including graphical elements from within the virtual environment; and assessing and optimizing the forwarding of the outbound multimedia streams based on the incoming data received from the plurality of client devices.

Finally, in step **608,** method **600** may proceed by forwarding the corresponding multimedia streams to client devices based on the data exchange management, wherein the multimedia streams are displayed to user graphical representations of users of the at least one client device.

In some embodiments, the method **600** further comprises, when forwarding the outbound multimedia streams, utilizing a routing topology, or a media processing topology, or a forwarding server topology, or other suitable multimedia server routing topologies, or a media processing and forwarding server topology, or other suitable server topologies.

In further embodiments, as a routing topology, the at least one media server computer uses a selective forwarding unit (SFU) topology, a Traversal Using Relay NAT (TURN) a spatially analyzed media server topology (SAMS), or a multimedia server routing topology.

In further embodiments, as a media processing topology, the at least one media server computer is configured to perform one or more operations on the incoming data comprising compressing, encrypting, re-encrypting, decrypting, decoding, combining, improving, mixing, enhancing, augmenting, computing, manipulating, encoding, or a combination thereof.

In further embodiments, when utilizing a forwarding server topology, the method 600 further comprises utilizing one or more of MCUs, cloud media mixers, and cloud 3D renderers.

In some embodiments, as a SAMS, the at least one media server computer is configured to analyze and process the incoming data of each client device related to user priority and the distance relationship between the corresponding user graphical representation and multimedia streams. The incoming data comprises one or more of meta-data, priority data, data classes, spatial structure data, three-dimensional positional, orientation or locomotion information, speaker or listener status data, availability status data, image, media, and scalable video codec-based video, or a combination thereof. In some embodiments, optimizing the forwarding of the outbound multimedia streams implemented by the at least one media server computer implementing the SAMS comprises optimizing bandwidth and computing resource utilization for the one or more receiving client devices.

In some embodiments, the SAMS optimizes the forwarding of the outbound data streams to each receiving client device by modifying, upscaling or downscaling the media for temporal features, spatial features, quality, and color features.

Computer-readable media having stored thereon instructions configured to cause one or more computers to perform any of the methods described herein are also described. As used herein, the term "computer readable medium" includes volatile and nonvolatile and removable and nonremovable media implemented in any method or technology capable of storing information, such as computer readable instructions, data structures, program modules, or other data. In general, functionality of computing devices described herein may be implemented in computing logic embodied in hardware or software instructions, which can be written in a programming language, such as C, C++, COBOL, JAVA PHP, Perl, Python, Ruby, HTML, CSS, JavaScript, VBScript, ASPX, Microsoft .NET languages such as C#, and/or the like. Computing logic may be compiled into executable programs or written in interpreted programming languages. Generally, functionality described herein can be implemented as logic modules that can be duplicated to provide greater processing capability, merged with other modules, or divided into sub modules. The computing logic can be stored in any type of computer readable medium (e.g., a non-transitory medium such as a memory or storage medium) or computer storage device and be stored on and executed by one or more general purpose or special purpose processors, thus creating a special purpose computing device configured to provide functionality described herein.

## Claims

1. A multimedia router system (200) comprising:
at least one media server computer comprising at least one processor (104, 204, 222) and memory, wherein the at least one media server computer is configured to receive and analyze incoming data (302, 304) comprising incoming multimedia streams from client devices (110, 210, 408), and adapt outbound multimedia streams for individual client devices based on the incoming data (302, 304) received from the client devices (110, 210, 408), wherein the incoming multimedia streams include elements from within at least one virtual environment (214, 400, 404, 504), and wherein the outbound multimedia streams are adapted for the individual client devices based on user priority data and spatial orientation data that describes spatial relationships between corresponding user graphical representations and sources of the incoming multimedia streams within the at least one virtual environment (214, 400, 404, 504).

2. The system (200, 300) of claim 1, wherein the at least one virtual environment (214, 400, 404, 504) is hosted on at least one dedicated server computer connected via a network (212) to the at least one media server computer, or is hosted in a peer-to-peer infrastructure and is relayed through the at least one media server computer.

3. The system (200, 300) of any one of the previous claims, wherein the at least one virtual environment (214, 400, 404, 504) comprises a virtual replica of a real-world location, and wherein the real-world location comprises a plurality of sensors providing further data to the virtual replica of the real-world location.

4. The system (200, 300) of any one of the previous claims, wherein the at least one media server computer uses a selective forwarding unit, SFU, topology, or a Traversal Using Relay NAT, TURN, topology, or a spatially analyzed media server topology, SAMS.

5. The system (200, 300) of any one of the previous claims, wherein the at least one media server computer is further configured to combine the incoming data (302, 304) in the form of a mosaic (506) comprising separate tiles where the individual multimedia streams of user graphical representations are streamed.

6. The system (200, 300) of any one of the previous claims, wherein the at least one media server computer is configured as a multipoint control unit, MCU, or a cloud media mixer, or a cloud 3D renderer.

7. The system (200, 300) of any one of the previous claims, wherein the at least one media server computer is configured to analyze and process the incoming data (302, 304) of each client device (110, 210, 408) and determine user priority and the spatial relationship between the corresponding user graphical representations and the sources of the incoming multimedia streams.

8. The system (200, 300) of any one of the previous claims, wherein adapting the outbound multimedia streams comprises optimizing bandwidth and computing resource utilization for the one or more receiving client devices (110, 210, 408).

9. The system (200, 300) of any one of the previous claims, wherein adapting the outbound multimedia streams comprises adapting temporal features, spatial features, quality, or color features, or a combination thereof.

10. A multimedia routing method comprising:
receiving, by at least one media server computer, incoming data (302, 304) comprising incoming multimedia streams from a plurality of client devices (110, 210, 408), wherein the incoming data (302, 304) is associated with user priority data and spatial orientation data that describes spatial relationships between corresponding user graphical representations and sources of the incoming multimedia streams within a virtual environment (214, 400, 404, 504);
analyzing the incoming data (302, 304) from the plurality of client devices (110, 210, 408) including graphical elements from within the virtual environment (214, 400, 404, 504);
adapting outbound multimedia streams based on the incoming data (302, 304) received from the plurality of client devices (110, 210, 408); and
forwarding the adapted outbound multimedia streams to one or more receiving client devices (110, 210, 408), wherein the adapted outbound multimedia streams are configured to be displayed to users of the one or more receiving client devices (110, 210, 408);
wherein the outbound multimedia streams are adapted for the individual client devices (110, 210, 408) based on user priority data and spatial orientation data that describes spatial relationships between the corresponding user graphical representations and sources of the incoming multimedia streams within the at least one virtual environment (214, 400, 404, 504).

11. The method (600) of claim 10 further comprising combining the incoming data (302, 304) in the form of a mosaic (506) comprising separate tiles where the individual multimedia streams of user graphical representations are streamed.

12. The method (600) of claim 10 or 11, further comprising determining user priority and the spatial relationships between the corresponding user graphical representations and the sources of the incoming multimedia streams.

13. The method (600) of claim 10, 11 or 12, wherein adapting the outbound multimedia streams comprises optimizing bandwidth and computing resource utilization for the one or more receiving client devices (110, 210, 408).

14. The method (600) of claim 10, 11, 12 or 13, wherein adapting the outbound multimedia streams comprises adapting temporal features, spatial features, quality, or color features, or a combination thereof.

15. A computer readable medium having stored thereon instructions configured to cause at least one media server computer comprising a processor (104, 204, 222) and memory to perform the method (600) of any one of claims 10 to 14.

## Patentansprüche

1. Multimedia-Routersystem (200), umfassend:
mindestens einen Medienservercomputer, umfassend mindestens einen Prozessor (104, 204, 222) und Speicher, wobei der mindestens eine Medienservercomputer konfiguriert ist, um eingehende Daten (302, 304) zu empfangen und zu analysieren, die eingehende Multimediaströme von Client-Vorrichtungen (110, 210, 408) umfassen, und ausgehende Multimediaströme für individuelle Client-Vorrichtungen basierend auf den eingehenden Daten (302, 304) anzupassen, die von den Client-Vorrichtungen (110, 210, 408) empfangen werden, wobei die eingehenden Multimediaströme Elemente von innerhalb mindestens einer virtuellen Umgebung (214, 400, 404, 504) beinhalten, und wobei die ausgehenden Multimediaströme für die individuellen Client-Vorrichtungen basierend auf Benutzerprioritätsdaten und räumlichen Orientierungsdaten angepasst werden, die räumliche Beziehungen zwischen entsprechenden grafischen Benutzerdarstellungen und Quellen der eingehenden Multimediaströme innerhalb der mindestens einen virtuellen Umgebung (214, 400, 404, 504) beschreiben.

2. System (200, 300) nach Anspruch 1, wobei die mindestens eine virtuelle Umgebung (214, 400, 404, 504) auf mindestens einem dedizierten Servercomputer gehostet wird, der über ein Netzwerk (212) mit dem mindestens einen Medienservercomputer verbunden ist, oder in einer Peer-to-Peer-Infrastruktur gehostet wird und durch den mindestens einen Medienservercomputer weitergeleitet wird.

3. System (200, 300) nach einem der vorhergehenden Ansprüche, wobei die mindestens eine virtuelle Umgebung (214, 400, 404, 504) eine virtuelle Replik eines Standorts in der realen Welt umfasst, und wobei der Standort in der realen Welt eine Vielzahl von Sensoren umfasst, die weitere Daten für die virtuelle Replik des Standorts in der realen Welt bereitstellen.

4. System (200, 300) nach einem der vorhergehenden Ansprüche, wobei der mindestens eine Medienservercomputer eine selektive Weiterleitungseinheit-, SFU-, Topologie oder eine Traversal Using Relay NAT-, TURN-, Topologie oder eine räumlich analysierte Medienservertopologie, SAMS, verwendet.

5. System (200, 300) nach einem der vorhergehenden Ansprüche, wobei der mindestens eine Medienservercomputer ferner konfiguriert ist, um die eingehenden Daten (302, 304) in Form eines Mosaiks (506) zu kombinieren, das getrennte Kacheln umfasst, in denen die individuellen Multimediaströme von grafischen Benutzerdarstellungen gestreamt werden.

6. System (200, 300) nach einem der vorhergehenden Ansprüche, wobei der mindestens eine Medienservercomputer als eine Mehrpunktsteuereinheit, MCU, oder ein Cloud-Medienmischer oder ein Cloud-3D-Renderer konfiguriert ist.

7. System (200, 300) nach einem der vorhergehenden Ansprüche, wobei der mindestens eine Medienservercomputer konfiguriert ist, um die eingehenden Daten (302, 304) jeder Client-Vorrichtung (110, 210, 408) zu analysieren und zu verarbeiten und die Benutzerpriorität und die räumliche Beziehung zwischen den entsprechenden grafischen Benutzerdarstellungen und den Quellen der eingehenden Multimediaströme zu bestimmen.

8. System (200, 300) nach einem der vorhergehenden Ansprüche, wobei das Anpassen der ausgehenden Multimediaströme das Optimieren der Bandbreiten- und Rechenressourcennutzung für die eine oder die mehreren empfangenden Client-Vorrichtungen (110, 210, 408) umfasst.

9. System (200, 300) nach einem der vorhergehenden Ansprüche, wobei das Anpassen der ausgehenden Multimediaströme das Anpassen von zeitlichen Merkmalen, räumlichen Merkmalen, Qualitäts- oder Farbmerkmalen oder einer Kombination davon umfasst.

10. Multimedia-Routingverfahren, umfassend:
Empfangen, durch mindestens einen Medienservercomputer, von eingehenden Daten (302, 304), die eingehende Multimediaströme von einer Vielzahl von Client-Vorrichtungen (110, 210, 408) umfassen, wobei die eingehenden Daten (302, 304) mit Benutzerprioritätsdaten und räumlichen Orientierungsdaten assoziiert sind, die räumliche Beziehungen zwischen entsprechenden grafischen Benutzerdarstellungen und Quellen der eingehenden Multimediaströme innerhalb einer virtuellen Umgebung (214, 400, 404, 504) beschreiben;
Analysieren der eingehenden Daten (302, 304) von der Vielzahl von Client-Vorrichtungen (110, 210, 408), einschließlich grafischer Elemente von innerhalb der virtuellen Umgebung (214, 400, 404, 504);
Anpassen ausgehender Multimediaströme basierend auf den eingehenden Daten (302, 304), die von der Vielzahl von Client-Vorrichtungen (110, 210, 408) empfangen werden; und
Weiterleiten der angepassten ausgehenden Multimediaströme an eine oder mehrere empfangende Client-Vorrichtungen (110, 210, 408), wobei die angepassten ausgehenden Multimediaströme konfiguriert sind, um Benutzern der einen oder der mehreren empfangenden Client-Vorrichtungen (110, 210, 408) angezeigt zu werden;
wobei die ausgehenden Multimediaströme für die individuellen Client-Vorrichtungen (110, 210, 408) basierend auf Benutzerprioritätsdaten und räumlichen Orientierungsdaten angepasst werden, die räumliche Beziehungen zwischen den entsprechenden grafischen Benutzerdarstellungen und Quellen der eingehenden Multimediaströme innerhalb der mindestens einen virtuellen Umgebung (214, 400, 404, 504) beschreiben.

11. Verfahren (600) nach Anspruch 10, ferner umfassend das Kombinieren der eingehenden Daten (302, 304) in Form eines Mosaiks (506), das getrennte Kacheln umfasst, in denen die individuellen Multimediaströme von grafischen Benutzerdarstellungen gestreamt werden.

12. Verfahren (600) nach Anspruch 10 oder 11, ferner umfassend das Bestimmen der Benutzerpriorität und der räumlichen Beziehungen zwischen den entsprechenden grafischen Benutzerdarstellungen und den Quellen der eingehenden Multimediaströme.

13. Verfahren (600) nach Anspruch 10, 11 oder 12, wobei das Anpassen der ausgehenden Multimediaströme das Optimieren der Bandbreiten- und Rechenressourcennutzung für die eine oder die mehreren empfangenden Client-Vorrichtungen (110, 210, 408) umfasst.

14. Verfahren (600) nach Anspruch 10, 11, 12 oder 13, wobei das Anpassen der ausgehenden Multimediaströme das Anpassen von zeitlichen Merkmalen, räumlichen Merkmalen, Qualitäts- oder Farbmerkmalen oder einer Kombination davon umfasst.

15. Computerlesbares Medium, auf dem Anweisungen gespeichert sind, die konfiguriert sind, um zu bewirken, dass mindestens ein Medienservercomputer, der einen Prozessor (104, 204, 222) und einen Speicher umfasst, das Verfahren (600) nach einem der Ansprüche 10 bis 14 durchführt.

## Revendications

1. Système de routeur multimédia (200) comprenant :
au moins un ordinateur serveur multimédia comprenant au moins un processeur (104, 204, 222) et une mémoire, dans lequel l'au moins un ordinateur serveur multimédia est configuré pour recevoir et analyser des données entrantes (302, 304) comprenant des flux multimédias entrants provenant de dispositifs clients (110, 210, 408), et adapter des flux multimédias sortants pour des dispositifs clients individuels sur la base des données entrantes (302, 304) reçues des dispositifs clients (110, 210, 408), dans lequel les flux multimédias entrants comprennent des éléments provenant d'au moins un environnement virtuel (214, 400, 404, 504), et dans lequel les flux multimédias sortants sont adaptés pour les dispositifs clients individuels sur la base de données de priorité d'utilisateur et de données d'orientation spatiale qui décrivent des relations spatiales entre des représentations graphiques d'utilisateur correspondantes et des sources des flux multimédias entrants dans l'au moins un environnement virtuel (214, 400, 404, 504).

2. Système (200, 300) selon la revendication 1, dans lequel l'au moins un environnement virtuel (214, 400, 404, 504) est hébergé sur au moins un ordinateur serveur dédié connecté via un réseau (212) à l'au moins un ordinateur serveur multimédia, ou est hébergé dans une infrastructure poste à poste et est relayé par l'intermédiaire de l'au moins un ordinateur serveur multimédia.

3. Système (200, 300) selon l'une quelconque des revendications précédentes, dans lequel l'au moins un environnement virtuel (214, 400, 404, 504) comprend une réplique virtuelle d'un emplacement du monde réel, et dans lequel l'emplacement du monde réel comprend une pluralité de capteurs fournissant d'autres données à la réplique virtuelle de l'emplacement du monde réel.

4. Système (200, 300) selon l'une quelconque des revendications précédentes, dans lequel l'au moins un ordinateur serveur multimédia utilise une topologie d'unité d'acheminement sélective, SFU, ou une topologie de type Traversal Using Relay NAT, TURN, ou une topologie de serveur multimédia analysée spatialement, SAMS.

5. Système (200, 300) selon l'une quelconque des revendications précédentes, dans lequel l'au moins un ordinateur serveur multimédia est en outre configuré pour combiner les données entrantes (302, 304) sous la forme d'une mosaïque (506) comprenant des fenêtres séparées où les flux multimédias individuels de représentations graphiques d'utilisateur sont diffusés en continu.

6. Système (200, 300) selon l'une quelconque des revendications précédentes, dans lequel l'au moins un ordinateur serveur multimédia est configuré comme une unité de commande multipoint, MCU, ou un mélangeur multimédia en nuage, ou un moteur de rendu 3D en nuage.

7. Système (200, 300) selon l'une quelconque des revendications précédentes, dans lequel l'au moins un ordinateur serveur multimédia est configuré pour analyser et traiter les données entrantes (302, 304) de chaque dispositif client (110, 210, 408) et déterminer la priorité d'utilisateur et la relation spatiale entre les représentations graphiques d'utilisateur correspondantes et les sources des flux multimédias entrants.

8. Système (200, 300) selon l'une quelconque des revendications précédentes, dans lequel l'adaptation des flux multimédias sortants comprend l'optimisation de la largeur de bande et de l'utilisation des ressources informatiques pour les un ou plusieurs dispositifs clients de réception (110, 210, 408).

9. Système (200, 300) selon l'une quelconque des revendications précédentes, dans lequel l'adaptation des flux multimédias sortants comprend l'adaptation de caractéristiques temporelles, de caractéristiques spatiales, de caractéristiques de qualité ou de couleur, ou d'une combinaison de celles-ci.

10. Procédé de routage multimédia comprenant :
la réception, par au moins un ordinateur serveur multimédia, de données entrantes (302, 304) comprenant des flux multimédias entrants provenant d'une pluralité de dispositifs clients (110, 210, 408), dans lequel les données entrantes (302, 304) sont associées à des données de priorité d'utilisateur et à des données d'orientation spatiale qui décrivent des relations spatiales entre des représentations graphiques d'utilisateur correspondantes et des sources des flux multimédias entrants dans un environnement virtuel (214, 400, 404, 504) ;
l'analyse des données entrantes (302, 304) provenant de la pluralité de dispositifs clients (110, 210, 408) comprenant des éléments graphiques provenant de l'environnement virtuel (214, 400, 404, 504) ;
l'adaptation de flux multimédias sortants sur la base des données entrantes (302, 304) reçues de la pluralité de dispositifs clients (110, 210, 408) ; et
l'acheminement des flux multimédias sortants adaptés vers un ou plusieurs dispositifs clients de réception (110, 210, 408), dans lequel les flux multimédias sortants adaptés sont configurés pour être affichés aux utilisateurs des un ou plusieurs dispositifs clients de réception (110, 210, 408) ;
dans lequel les flux multimédias sortants sont adaptés pour les dispositifs clients individuels (110, 210, 408) sur la base de données de priorité d'utilisateur et de données d'orientation spatiale qui décrivent des relations spatiales entre les représentations graphiques d'utilisateur correspondantes et des sources des flux multimédias entrants dans l'au moins un environnement virtuel (214, 400, 404, 504).

11. Procédé (600) selon la revendication 10, comprenant en outre la combinaison des données entrantes (302, 304) sous la forme d'une mosaïque (506) comprenant des fenêtres séparées où les flux multimédias individuels de représentations graphiques d'utilisateur sont diffusés en continu.

12. Procédé (600) selon la revendication 10 ou 11, comprenant en outre la détermination de la priorité d'utilisateur et des relations spatiales entre les représentations graphiques d'utilisateur correspondantes et les sources des flux multimédias entrants.

13. Procédé (600) selon la revendication 10, 11 ou 12, dans lequel l'adaptation des flux multimédias sortants comprend l'optimisation de la largeur de bande et de l'utilisation des ressources informatiques pour les un ou plusieurs dispositifs clients de réception (110, 210, 408).

14. Procédé (600) selon la revendication 10, 11, 12 ou 13, dans lequel l'adaptation des flux multimédias sortants comprend l'adaptation de caractéristiques temporelles, de caractéristiques spatiales, de caractéristiques de qualité ou de couleur, ou d'une combinaison de celles-ci.

15. Support lisible par ordinateur sur lequel sont stockées des instructions configurées pour amener au moins un ordinateur serveur multimédia comprenant un processeur (104, 204, 222) et une mémoire à réaliser le procédé (600) selon l'une quelconque des revendications 10 à 14.
